# EUROPEAN PATENT APPLICATION

(11) **EP 0 846 966 A2**
(43) Date of publication of application: **10.06.1998**
(21) Application number: 97121327.7
(22) Date of filing: 04.12.1997
(51) Int. Cl.: G02B 6/30

(54) **Optical waveguide**

(30) Priority: 06.12.1996 JP 326610/96
(71) Applicant: NEC CORPORATION, Tokyo (JP)
(72) Inventor: Yoneda, Isao, Minato-ku, Tokyo (JP)
(74) Representative: VOSSIUS & PARTNER

(57) **Abstract**

The invention provides an optical waveguide by which, where a laser device of the surface light emitting type or a light receiving device of the surface light receiving type and the optical waveguide are to be coupled to each other, even if the device is to be mounted as of the plane mounting type, the mounting form is not complicated and the production cost necessary for optical axis adjustment is not increased. A V-shaped groove is formed on a surface of a substrate, and light reflecting films for reflecting light are formed at the opposite ends of the V-shaped groove while an optical fiber is mounted in the V-shaped groove. By the construction, light is bent by the light reflecting films formed on inclined surfaces of the V-shaped groove. Consequently, in coupling between the optical fiber and a light emitting or receiving device of the surface light emitting type or the surface light receiving type, the optical semiconductor device can be mounted with a high degree of accuracy directly on the same substrate just above any of the light reflecting films with the light emitting surface or the light receiving surface thereof directed downwardly.

## Description

This invention relates to an optical waveguide, and more particularly to an optical waveguide for an optical module for optical transmission.

An optical waveguide of the type mentioned is conventionally used in such a construction that a waveguide portion is formed on a substrate and light is coupled in a horizontal direction from a waveguide end face on a side surface of the substrate. A plurality of V-shaped grooves are formed in advance on the wafer substrate.

In order to couple the optical waveguide and an optical semiconductor device to each other, the optical semiconductor device is mounted with a high degree of accuracy on the same substrate on which the optical waveguide is formed using a self alignment effect by solder bumps. The optical waveguide is sometimes used in such a construction that, for example, a device of the end face light emitting type is mounted on the input side of the optical waveguide while an optical fiber is mounted on the output side of the optical waveguide, and is used in such a form that the light emitting device is mounted in a self alignment method while the optical fiber is mounted in a V-shaped groove.

The conventional optical waveguide described above is suitable for the plane mounting because, in optical coupling thereof to a light emitting device of the end face light emitting type or a light receiving device of the end face light receiving type, it can be optically coupled at an end face thereof to an end face of the device. However, in order to optically couple a laser device of the plane light emitting time or a light receiving device of the plane light receiving type to the conventional optical waveguide, it is necessary to either bend the light advancing direction perpendicularly or mount the optical semiconductor device uprightly perpendicularly to the end face of the optical waveguide. Consequently, the conventional optical waveguide is disadvantageous in that, where it is applied to the plane mounting, the mounting form is complicated and the production cost necessary for optical axis adjustment is increased, resulting in a high production cost.

Further, the waveguide portion of the conventional optical waveguide must be patterned so as to be as straight as possible because, where the optical waveguide portion is curved with a small radius of curvature or bent at the right angle, part of light propagating in the optical waveguide leaks to the outside of the waveguide, resulting in optical transmission loss. Therefore, with the conventional optical waveguide, it is difficult to vary the light advancing direction in a short distance. Further, since the optical waveguide is formed by a complicated process, it is difficult to achieve a high yield.

It is an object of the present invention to provide an optical waveguide by which, since light is bent by a light reflecting film, in coupling between an optical fiber and a light emitting or receiving device of the surface light emitting type or the surface light receiving type, the optical semiconductor device can be mounted directly on the same substrate, on which the optical waveguide is mounted, just above the light reflecting film with the light emitting surface or the light receiving surface thereof directed downwardly and accordingly the optical semiconductor device need not be mounted on a substrate different from that for the waveguide, and consequently, the number of parts can be reduced.

It is another object of the present invention to provide an optical waveguide by which, since, where it is combined with a light emitting or receiving device of the surface light emitting type or the surface light receiving type, an optical axis offset can be converted from a positional offset in the direction of height into a horizontal (in-plane) positional offset which is advantageous for the mounting accuracy in self alignment, a mounting form advantageous for mounting of self alignment by solder bumps can be used, and consequently, the optical axes of the optical semiconductor device and the optical waveguide can automatically be aligned with each other without any adjustment.

It is a further object of the present invention to provide an optical waveguide which, since the reflecting angles at the opposite ends of a V-shaped groove are a normally constant angle because the V-shaped groove is formed by anisotropic etching and the center of the optical axis of light to be reflected is always the same irrespective of the length of an optical fiber to be mounted in the V-shaped groove and consequently a high degree of accuracy is not required for the length of the fiber and the optical fiber is required only to be accommodated in the V-shaped groove, can be produced readily and achieves a high yield.

It is a still further object of the present invention to provide an optical waveguide which allows, since optical waveguides are coupled in a vertical direction to the surfaces of substrates thereof, multiple stage connection of optical waveguides and allows, where optical waveguides are connected in multiple stages, since optical connection between the optical waveguides can he established efficiently by mounting them such that the optical axes thereof may be aligned with each other with light reflecting films interposed therebetween, free variation of the direction of light only by changing the direction of a substrate and besides minimizes occurrence of excessive loss.

In order to attain the objects described above, according to the present invention, there is provided an optical waveguide for an optical module for optical transmission, comprising a pair of light reflecting films formed at the opposite ends of a V-shaped groove formed on a surface of a substrate for reflecting light, and an optical fiber mounted in the V-shaped groove.

Preferably, the optical waveguide further comprises an optical lens mounted between at least one end of the optical fiber and one of the light reflecting films which opposes to an end face of the optical fiber at the one end.

Since the optical waveguide for an optical module for optical transmission according to the present invention comprises a pair of light reflecting films formed at the opposite ends of a V-shaped groove formed on a surface of a substrate for reflecting light, and an optical fiber mounted in the V-shaped groove, or further comprises an optical lens mounted between at least one end of the optical fiber and one of the light reflecting films which opposes to an end face of the optical fiber at the one end as described above, the following advantages can be achieved.
1. Since the optical fiber and the light reflecting films are combined, the optical waveguide has a function of bending light in a perpendicular direction with respect to the surface of the substrate, and light is inputted to or outputted from the optical waveguide in a perpendicular direction with respect to the surface of the substrate. Consequently, where the optical waveguide is combined with a light emitting or receiving device of the surface light emitting type or the surface light receiving type, since an optical axis offset can be converted from a positional offset in the direction of height to a horizontal (in-plane) positional offset which is advantageous for the self alignment mounting accuracy, a mounting form which is advantageous for self alignment mounting by solder bumps can be achieved.
2. Since light is bent by each of the light reflecting films, in coupling between the optical fiber and a light emitting or receiving device of the surface light emitting type or the surface light receiving type, the optical semiconductor device can be mounted directly on the same substrate just above any of the light reflecting films with the light emitting surface or the light receiving surface directed downwardly. Consequently, the optical semiconductor device need not be mounted on a substrate different that for the waveguide, and the number of parts can be reduced.
3. The optical semiconductor device can be mounted with a high degree of accuracy by self alignment joining by solder bumps placed on electrode pads formed with a high degree of accuracy. Consequently, the optical axes of the optical semiconductor device and the optical waveguide can be automatically aligned with each other without any adjustment.
4. Since the V-shaped groove can be formed by anisotropic etching of a silicon substrate or the like, the reflecting angles at the opposite ends of the V-shaped groove can always be made a fixed angle, and the center of the optical axis of light is provided at a normally same position. Consequently, irrespective of the length of the optical fiber to be mounted in the V-shaped groove, the center of the optical axis of light to be reflected is always the same, and a high degree of accuracy is not required for the length of the optical fiber. Consequently, the optical fiber can be produced readily and a high yield can be achieved.
5. With the optical waveguide of the present invention, since light is bent and coupled by any of the light reflecting films in a perpendicular direction to the surface of the substrate, a plurality of such waveguides can be connected in multiple stages. In this instance, by mounting the optical waveguides such that the optical axes thereof may be aligned with each other with the light reflecting films interposed therebetween, optical connection between the optical waveguides can be established efficiently. Consequently, the direction of light can be varied freely only by changing the direction of the substrate, and accordingly, occurrence of excess loss can be minimized.
6. Further, where the optical lens is further disposed between the optical fiber and one of the light reflecting films, outgoing light of the optical fiber can be converged, and since light reflected by the light reflecting film advances without being diverged, a result of a higher degree of accuracy can be achieved.

The above and other objects, features, and advantages of the present invention will become apparent from the following description based on the accompanying drawings which illustrate an example of a preferred embodiment of the present invention.

### BRIEF DESCRIPTION OF THE DRAWINGS

Fig. 1A is a perspective view showing a construction of an embodiment of an optical waveguide of the present invention, and Fig. 1B is a sectional view taken along line A-A' of Fig. 1A;
Fig. 2A is a perspective view showing a construction where an optical semiconductor device is mounted on the optical waveguide of the present embodiment, and Fig. 2B is a sectional view taken along line B-B' of Fig. 2A where the optical semiconductor device of Fig. 2A is mounted on the optical waveguide;
Fig. 3A is a perspective view showing a construction wherein two optical waveguides of the present embodiment are combined, and Fig. 3B is a sectional view of the combined optical waveguides taken along line C-C' of Fig. 3A; and
Fig. 4A is a perspective view showing a construction of a second embodiment of the present invention, and Fig. 4B is a sectional view taken along line D-D' of Fig. 4A.

### DETAILED DESCRIPTION OF THE PREFERRED EMBODIMENTS

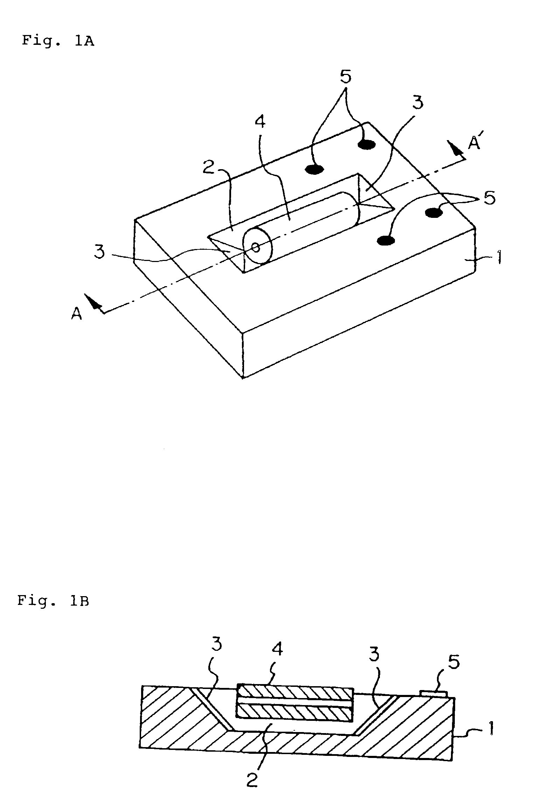

Referring first to Fig. 1A and Fig. 1B, an optical waveguide of an embodiment of the present invention includes substrate 1 on which V-shaped groove 2 is formed, and a core of optical fiber 4 having a length with which optical fiber 4 can be mounted in V-shaped groove 2 is mounted in V-shaped groove 2. Light reflecting films 3 made of a metal having a high reflection factor are formed on inclined surfaces of V-shaped groove 2 which oppose to the end faces at the opposite ends of optical fiber 4. The material from which light reflecting films 3 are formed generally includes a thin film of chrome formed on silicon for assuring high adhesion and a thin film of gold formed on the thin chrome film and having a high reflection factor. Electrode pads 5 are formed on the surface of substrate 1 at positions around one of light reflecting films 3. The positions and the number of electrode pads 5 may be selected arbitrarily.

Generally, silicon is used as a material of substrate 1. The opposite surfaces of substrate 1 are covered with oxide films of SiO₂, and V-shaped groove 2 is formed by removing SiO₂ at the location at which V-shaped groove 2 is to be formed and performing wet etching substrate 1 with KOH using the remaining SiO₂ as a mask. Meanwhile, electrode pads 5 are formed as electrode patterns by vapor depositing titanium, platinum and gold in this order on one of the oxide films of SiO₂. Naturally, another construction wherein a plurality of V-shaped grooves 2 and electrodes are formed on one substrate 1 and optical fiber 4 is mounted in each of V-shaped groove 2 may be employed

The optical waveguide of the present invention does not have a directivity in regard to the light advancing direction, and accordingly, light may be inputted or outputted to or from any of the left and right sides in Fig. 1B. For example, where the angle of light reflecting films 3 is 45 degrees and light comes in from the left side and goes out to the right side, if the light is inputted in a direction perpendicular to the surface of substrate 1 from just above the left side one of light reflecting films 3, then the light is reflected by left side light reflecting film 3 and advances in a horizontal direction. The reflected light is inputted to optical fiber 4 via the left side end face thereof. The light having passed optical fiber 4 goes out from the right side end face of optical fiber 4 and is reflected by the right side one of light reflecting films 3 so that it thereafter goes out to just above right side light reflecting film 3.

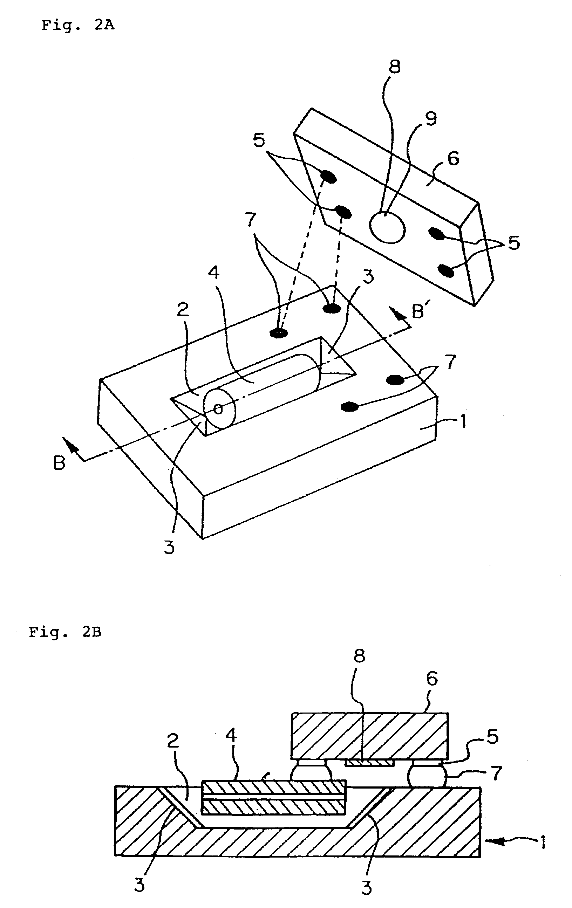

Fig. 2A and Fig. 2B illustrate a manner in which optical semiconductor device 6 is mounted on the optical waveguide of the present embodiment such that light emitting surface 8 or light receiving surface 9 of optical semiconductor device 6 may be positioned just above light reflecting film 3 at one end of V-shaped groove 2 of the optical waveguide. It is to be noted that, while the following description is given of a case where optical semiconductor device 6 is a light emitting element, also another construction wherein optical semiconductor device 6 is a light receiving element is applicable. It is to be noted that, in the latter construction, the light advancing direction is reversed.

One optical fiber 4 and four electrode pads 5 are disposed on the surface of optical semiconductor device 6, and solder bumps 7 as four electrode pads are disposed on the surface of substrate 1 of the optical waveguide in the proximity of light reflecting film 3 such that they may be registered with the arrangement of electrode pads 5 of optical semiconductor device 6. The positions of electrode pads 5 and solder bumps 7 are determined with a high degree of accuracy in advance so that optical semiconductor device 6 may be mounted with the optical axes of electrode pads 5 and solder bumps 7 may be aligned with each other in order that light going out from light emitting surface 8 of optical semiconductor device 6 may be coupled efficiently to the core of optical fiber 4 via light reflecting film 3.

Optical semiconductor device 6 is joined to substrate 1 of the optical waveguide by solder bumps 7 of gold formed at the electrodes of the surface of substrate 1 of the optical waveguide. Optical semiconductor device 6 is temporarily placed on the surface of substrate 1 with the front surface thereof directed downwardly such that solder bumps 7 and electrode pads 5 of optical semiconductor device 6 may contact with each other, and then is entirely heated in a nitrogen atmosphere to melt solder bumps 7 to join optical semiconductor device 6 and substrate 1 to each other. Thereupon, optical semiconductor device 6 is joined with a high degree of mounting accuracy to substrate 1 by the surface tensions of molten solder bumps 7.

A manner in which light propagates in the optical waveguide is described with reference to the sectional view of Fig. 2B. As seen from Fig. 2B, light emitted from light emitting surface 8 advances downwardly until it is reflected by right side light reflecting film 3 so that it thereafter advances in the leftward direction and propagates in optical fiber 4. Thereafter, the light goes out from the left side of optical fiber 4 and is reflected by left side light reflecting film 3 so that it thereafter goes out upwardly.

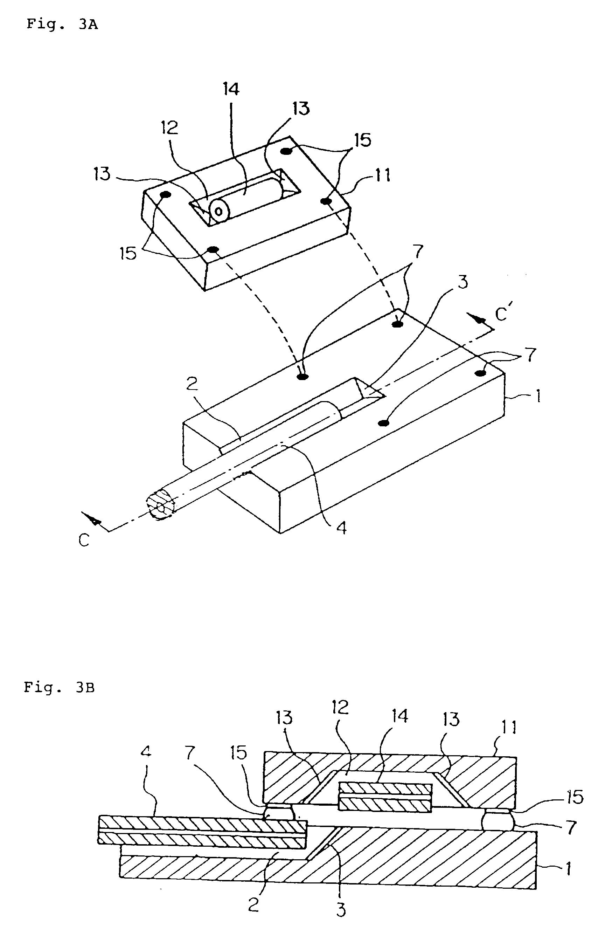

Fig. 3A and Fig. 3B illustrate an arrangement of optical waveguides where two optical fibers 4 and 14 of the present embodiment are coupled to each other. In the arrangement shown, substrate 1 of one of the optical waveguides is mounted on substrate 11 of the other optical waveguide such that the optical axes of optical fibers 4 and 14 may be aligned with each other with light reflecting films 3 and 13 interposed therebetween.

Two optical fibers 4 and 14 are coupled to each other while light is bent twice by two light reflecting films 3 and 13. While, in the application shown in Fig. 2B, light is not bent after it is reflected by right side light reflecting film 3, by repeating such a construction as described above, multiple stage connection can be obtained with light reflecting films 3 interposed between them.

It is to be noted that, since optical fiber 4 or 14 described above can make emergent light therefrom as collimate light if a multi-mode optical fiber having a length equal to an integral number of times one half a wavelength is used for optical fiber 4 or 14, there is an advantage that light reflected by any of light reflecting films 3 advances without being diverged. In this instance, since there is no particular difference in structure except the length of the optical fiber, the application is not shown in the drawings.

Now, materials, dimensions, production methods and so forth are described for each of the applications described above in regard to the embodiment of the present invention.

In the embodiment of Fig. 1A and Fig. 1B, the size of substrate 1 is 4 mm in depth, 4 mm in length and 450 µm in thickness. Substrate 1 is formed by cutting a silicon wafer with a thermally oxidized film of 1 µm thick added thereto into a piece of a necessary size after the electrode patterns, V-shaped groove 2 and light reflecting films 3 are formed collectively on the silicon wafer. The electrode patterns are formed from titanium, platinum or gold, and V-shaped groove 2 are formed by removing the thermally oxidized film on the surface of the wafer with a size of approximately 2 mm in length, 170 µm in width and 120 µm in depth using buffered hydrofluoric acid and immersing substrate 1 in potassium hydroxide (KOH) solution to wet etch the silicon.

Light reflecting films 3 are formed from chrome of 500 angstrom thick and gold of 2,000 angstrom thick on the inclined surfaces of V-shaped groove 2. Optical fiber 4 is formed by cutting a single mode fiber of 1.5 mm long having a diameter of 125 µm and a core diameter of 10 µm into a piece of 1.5 mm long and mounted onto and secured to V-shaped groove 2 using an ultraviolet ray setting resin, a thermally setting resin or solder.

Meanwhile, Fig. 2A and Fig. 2B show the application wherein optical semiconductor device 6 is mounted on the optical waveguide of the present invention as described above. Here, a PIN photo photodiode of the surface light receiving type is mounted on optical semiconductor device 6.

The PIN photodiode has light receiving surface 9 of a light receiving diameter of 70 µm⌀ disposed at the center of the surface of substrate 1 of indium-phosphorous and has electrodes of a diameter of 70 µm⌀ disposed around light receiving surface 9. The electrodes serve as lead electrodes of the anodes and the cathodes and pads for solder adhesion upon mounting.

As the method of mounting the PIN photodiode is mounted onto substrate 1, AuSn solder bumps 7 formed at the electrodes on substrate 1 are heated to a temperature of 300°C so as to be melted to mount the PIN photo photodiode onto substrate 1 at a predetermined position with a high degree of accuracy by an alignment effect by the surface tensions of solder bumps 7. In this instance, the mounting accuracy in the plane obtained is approximately ±1 µm and the accuracy in the direction of height obtained is approximately ±2 µm. The height of solder bumps 7 after adhesion is approximately 50 µm.

On the other hand, Fig. 3A and Fig. 3B show the application wherein two optical waveguides of the present embodiment are connected in two stages as described hereinabove. On substrate 1 of one of the optical waveguides on the lower side in Fig. 3A or 3(b), V-shaped groove 2 is formed in such a manner as to extend to an end of substrate 1 and light reflecting film 3 is formed only on one inclined surface formed in the proximity of the center of substrate 1. This V-shaped groove 2 is suitable to mount therein a cable having an optical connector attached to one end of optical fiber 4 having a pigtail-like shape.

V-shaped grooves 2 and 12 are formed sufficiently deep so that optical fibers 4 and 14 may not protrude from the surfaces of substrates 1 and 11, respectively. If connection of the waveguides is performed on a straight line, then the angles of the light reflecting films 3 and 13 can be set arbitrarily to establish coupling. When connection of the optical waveguides is performed in a direction displaced from a straight line, the angles of the inclined surfaces of light reflecting films 3 and 13 must be 45 degrees.

Now, a second embodiment is described.

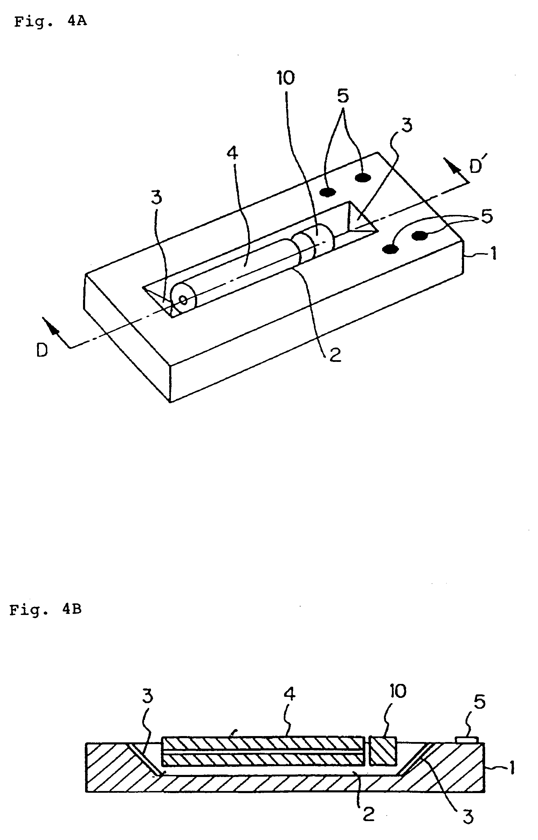

Fig. 4A is a perspective view showing a construction of the second embodiment, and Fig. 4B is a sectional view taken along line D-D' of Fig. 4A.

Fig. 4A and Fig. 4B show a form wherein lens 10 is disposed between optical fiber 4 and a light reflecting film described hereinabove in connection with the first embodiment. Since this lens 10 converges outgoing light from optical fiber 4 or incoming light to optical fiber 4, light reflected from light reflecting film 3 can advance without being diverged. It is to be noted that, while it is shown in Fig. 4A and Fig. 4B that self focusing lens 10 is disposed only on the right side of optical fiber 4, naturally a better effect can be achieved where it is disposed on the opposite left and right sides of optical fiber 4.

It is to be understood, however, that although the characteristics and advantages of the present invention have been set forth in the foregoing description, the disclosure is illustrative only, and changes may be made in the arrangement of the parts within the scope of the appended claims.

## Claims

1. An optical waveguide for an optical module for optical transmission, characterized in that a V-shaped groove is formed on a surface of a substrate, a pair of light reflecting films is formed at the opposite ends of said V-shaped groove, and an optical fiber is mounted in said V-shaped groove.

2. An optical waveguide as claimed in claim 1, further characterized in that an optical lens is mounted between at least one end of said optical fiber and one of said light reflecting films which opposes to an end face of said optical fiber at the one end.
